# FASCICULE DE BREVET EUROPEEN

(11) **EP 2 851 592 B1**
(45) Date de publication et mention de la délivrance du brevet: **11.09.2019**
(21) Numéro de dépôt: 14185851.4
(22) Date de dépôt: 22.09.2014
(51) Int. Cl.: F16K 17/32, F16L 55/10, F16K 17/02, F16L 55/128

(54) **Dispositif de contrôle insérable dans une canalisation**
In eine Kanalisation einsetzbare Kontrollvorrichtung
Inspection device suitable for insertion into a pipeline

(30) Priorité: 24.09.2013 FR 1359154
(43) Date de publication de la demande: 25.03.2015
(73) Titulaire: GRDF, 75009 Paris (FR)
(72) Inventeur: Gachenot, Eric, 68190 Ensisheim (FR); Soleau, Pierre, 75013 Paris (FR)
(74) Mandataire: Novagraaf Technologies

(56) Documents cités:
- EP-A1- 1 059 481
- FR-A1- 2 916 511
- US-A- 2 256 775
- US-A- 2 806 484

## Description

### Domaine technique

La présente invention se rapporte à un dispositif de contrôle insérable dans une canalisation afin d'obturer ou libérer le passage d'un fluide dans la canalisation.

### Etat de la technique

Le renforcement de la sécurité dans la distribution de fluides tels que du gaz naturel invite à prendre des mesures particulières lors de la modification d'un réseau de distribution. En particulier, il est souhaitable, en cas de suppression d'un branchement depuis une conduite principale vers une canalisation secondaire d'obturer la canalisation secondaire au plus près de la conduite principale. Il est également souhaitable de réaliser cette obturation en conservant la conduite principale en charge, afin de ne pas gêner l'exploitation du réseau.

Il est possible de réaliser un pincement localisé de la conduite à obturer afin de réaliser une obturation temporaire, puis de réaliser la pose d'un bouchon définitif. Le pincement est alors relâché. L'inconvénient d'une telle méthode est que le pincement détériore la conduite et la fragilise.

On connaît un dispositif de protection des branchements existants prévu pour interrompre le débit de gaz en cas d'excès de débit, qui serait provoqué par exemple par la rupture de la canalisation en aval du dispositif. Ce dispositif est décrit en particulier dans le document FR 2 916 511. Ce dispositif comporte un corps de forme allongée et plus petit en diamètre que le diamètre intérieur de la canalisation dans laquelle il est destiné à s'insérer. Le corps comporte un joint à coupelle destiné à assurer l'étanchéité entre le corps et la canalisation. Par ailleurs des moyens de centrage comportent une bague comportant des griffes disposées en éventail. Les griffes prennent un appui élastique dans la canalisation et, du fait de la disposition en éventail, centrent le corps dans la canalisation. De plus, les griffes sont orientées vers l'aval, de telle sorte que sous l'effet de la pression de gaz en amont, les griffes ont tendance à s'arc-bouter contre la paroi de la canalisation, évitant le déplacement du dispositif dans la canalisation.

Un tel dispositif est mis en place à distance en utilisant un outil qui comporte un fourreau et un vérin d'éjection, tel que par exemple celui décrit dans le document FR 2 931 531 A1. Le dispositif est introduit dans le fourreau en comprimant le joint à coupelle et en rabattant les griffes de la bague vers le corps. Le fourreau avec le dispositif est introduit dans la canalisation et, arrivé en position, le dispositif est sorti du fourreau par l'actionnement du vérin d'éjection. Les griffes de la bague et le joint à coupelles se déploient dans la canalisation et prennent appui contre la face intérieure de sa paroi.

Un tel dispositif ne réalise une obturation que lorsque le débit devient excessif, par exemple lors de l'arrachage de la canalisation. Il ne permet de commander ni l'ouverture ni la fermeture du passage.

L'invention vise à fournir un dispositif d'obturation insérable à l'intérieur d'une conduite et permettant d'obturer ou de libérer sur commande le passage d'un fluide dans la conduite.

### Description de l'invention

Avec ces objectifs en vue, l'invention a pour objet un dispositif de contrôle du passage d'un fluide destiné à être inséré dans une canalisation, le dispositif comportant un corps de forme allongée et s'étendant entre une extrémité amont et une extrémité aval, un obturateur formant un clapet avec un siège du corps pour contrôler le passage du fluide entre l'extrémité amont et l'extrémité aval, le clapet prenant une position fermée dans laquelle le passage du fluide entre l'extrémité amont et aval est obturé et une position ouverte dans laquelle le passage du fluide est possible, le dispositif étant caractérisé en ce qu'il comporte des moyens de maintien du clapet en position fermée, des moyens d'actionnement pour passer le clapet de la position fermée à la position ouverte et des moyens d'ouverture aptes à maintenir le clapet en position ouverte après l'actionnement par les moyens d'actionnement.

En prévoyant des moyens d'actionnement, le dispositif peut passer de l'état obturé à l'état passant, permettant ainsi de former une obturation de la canalisation lors de sa mise en place, puis de laisser passer le fluide pour une remise en service de la canalisation par la suite. L'état passant une fois établi n'est pas changé. Même en cas de rupture de la canalisation en aval, un débit est maintenu, même s'il est limité, de telle sorte que la présence de gaz peut être détectée et une alerte donnée sur la dégradation de la canalisation.

De manière particulière, les moyens d'ouverture sont irréversibles. Ceci permet de simplifier la conception des moyens d'ouverture, comme ont le verra mieux par la suite, ainsi que les moyens d'actionnement. Dans cette configuration, une seule remise en service est possible, et celle-ci ne permet plus de former à nouveau une obturation.

Selon une disposition constructive, l'obturateur comporte une tête coopérant avec le siège pour former le clapet et une tige montée coulissante dans le corps et portant la tête. La tige assure ainsi le guidage de la tête.

De manière particulière, les moyens d'ouverture comportent une première gorge circulaire sur la tige, une deuxième gorge circulaire dans le corps dans laquelle se loge au moins une bille métallique en périphérie de la tige, les gorges étant en vis-à-vis l'une de l'autre lorsque le clapet est en position ouverte, la bille étant apte à se loger dans la première gorge en restant en saillie de la tige dans la deuxième gorge afin de réaliser le maintien de l'obturateur pour que le clapet soit ouvert. Initialement, la bille est placée dans la deuxième gorge. La tige peut alors coulisser, la bille restant dans la deuxième gorge. Lorsque les deux gorges coïncident, la bille se loge dans la première gorge mais sans être noyée dans ladite première gorge. Elle fait saillie au-delà du diamètre de la tige, ce qui réalise un blocage relatif entre la tige et le corps, la bille faisant obstacle au coulissement.

Selon une autre disposition, les moyens de maintien en position fermée comportent un ressort agissant sur l'obturateur dans le sens vers le côté aval. Le ressort maintient la tête de l'obturateur sur le siège. L'orientation de la tête est telle que la pression amont tend à plaquer la tête sur le siège. Ainsi, même si la pression en amont augmente, la fermeture du dispositif est toujours assurée.

D'une manière particulière, la tête de l'obturateur est du côté amont de la tige, et le ressort est placé autour de la tige en appui d'une part côté aval sur une collerette solidaire de la tige et d'autre part sur le corps côté amont.

Selon une disposition particulière, les moyens d'actionnement comportent la surface de l'obturateur en communication avec l'extrémité aval de manière à former un piston actionné par une pression alimentant l'extrémité aval. Ainsi, on peut commander l'ouverture du clapet en fournissant une pression importante du côté aval, de manière à obtenir le déplacement de l'obturateur dans un sens d'ouverture. La pression agit sur la surface de l'obturateur afin de générer une force de déplacement de l'obturateur.

Selon un perfectionnement, le dispositif comporte des moyens de centrage dans la canalisation. Les moyens de centrage assurent le positionnement du dispositif dans la canalisation.

Selon des caractéristiques spécifiques, les moyens de centrage comportent au moins deux bagues, chaque bague comportant des griffes disposées en éventail, les griffes d'au moins une bague étant orientées vers l'amont et les griffes d'au moins une bague étant orientées vers l'aval, chaque griffe comportant une extrémité libre sollicitée élastiquement vers une position de déploiement radial. Les griffes appuient par leur extrémité libre sur la canalisation en assurant ainsi le centrage du dispositif. De plus, en étant orientées par rapport à la canalisation, elles prennent appui sur celle-ci en créant un arc-boutement. Les griffes orientées vers l'aval empêchent le déplacement du dispositif vers l'aval, tandis que celles orientées vers l'amont empêchent le déplacement du dispositif vers l'amont. Le dispositif est ainsi bloqué en position dans la canalisation.

Selon l'invention, le dispositif comporte des moyens d'étanchéité sur le corps aptes à s'étendre et réaliser une étanchéité entre le corps et la canalisation. Ainsi le flux de fluide est entièrement canalisé vers le clapet qui commande complètement le flux entre l'amont et l'aval.

Selon une disposition constructive, les moyens d'étanchéité comportent un double joint à coupelles, les coupelles étant orientées dans des sens opposés. Le document FR 2 916 511 montre déjà un joint à coupelle réalisant une étanchéité entre le corps du dispositif, mais dans une seule direction. En doublant les coupelles dans des sens opposés, l'étanchéité est réalisée dans les deux sens de différence de pression.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue en coupe longitudinale d'un dispositif conforme à un mode de réalisation de l'invention dans une position fermée ;
- la figure 2 est une vue similaire à la figure 1 en position ouverte.

### DESCRIPTION DETAILLEE

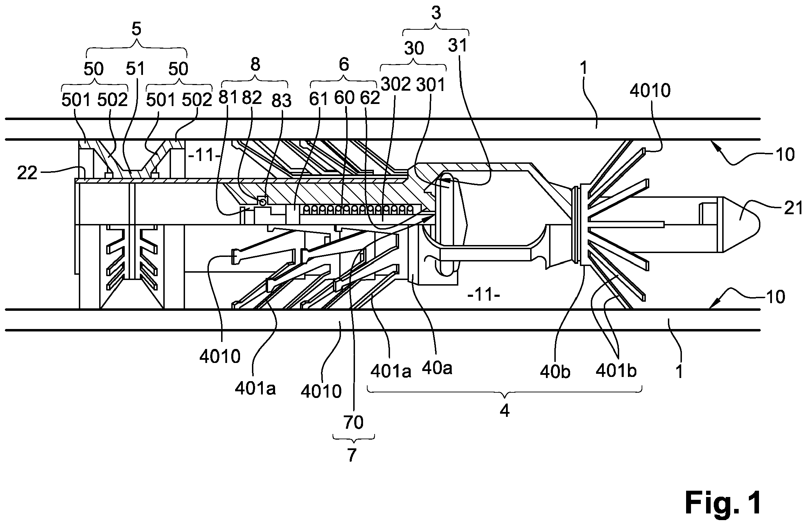

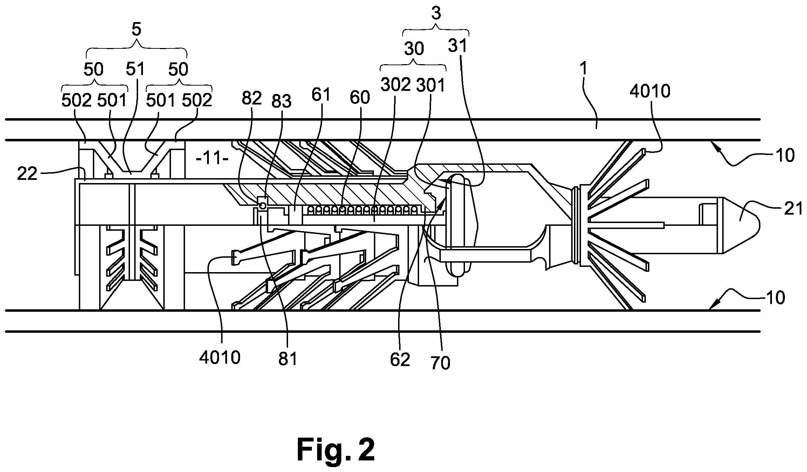

Un dispositif de contrôle du flux d'un fluide est montré sur les figures 1 et 2. Un tel dispositif est destiné à être inséré dans une canalisation 1 déjà installée, et pour laquelle on souhaite une fermeture temporaire, avec la possibilité de l'ouvrir par la suite.

Le dispositif comporte un corps 2 de forme allongée et s'étendant entre une extrémité amont 21 et une extrémité aval 22. L'extrémité amont 21 est destinée à être placée en amont selon le sens de distribution prévu pour le fluide. Un obturateur 30 formant un clapet 3 avec un siège 31 du corps 2 est prévu dans le corps 2 pour contrôler le passage du fluide entre l'extrémité amont 21 et l'extrémité aval 22. Le clapet 3 prend une position fermée dans laquelle le passage du fluide entre l'extrémité amont 21 et aval 22 est obturé, comme le montre la figure 1, et une position ouverte dans laquelle le passage du fluide est possible, comme le montre la figure 2.

Pour le maintien en position du dispositif dans la canalisation 1, celui-ci comporte des moyens de centrage 4 et des moyens d'étanchéité 5.

Les moyens de centrage 4 comportent une série de bagues 40a munies de griffes 401a disposées en éventail et orientées vers l'aval et une bague 40b dont les griffes 401b sont orientées vers l'amont. Chaque griffe 401a, 401b comporte une extrémité libre 4010 sollicitée élastiquement vers une position de déploiement radial. Ainsi les extrémités libres 4010 des griffes 401a, 401b sont en appui contre la face intérieure 10 de la canalisation 1.

Les moyens d'étanchéité 5 sont fixés sur le corps 2 et sont aptes à s'étendre et réaliser une étanchéité entre le corps 2 et la canalisation 1. Ils comportent un double joint à coupelles 50, les coupelles 50 étant orientées dans des sens opposés. Les coupelles 50 comportent une partie centrale 501 en forme de tronc de cône attachée à un support tubulaire 51 enserrant le corps 2 et une lèvre 502 de forme tubulaire fixée en périphérie de la partie centrale 501. Les coupelles 50 sont réalisées par exemple en élastomère de manière à se déployer radialement jusqu'à la face intérieure de la canalisation 1. Les parties centrales 501 sont attachées au même support tubulaire 51 et sont orientées à l'opposé l'une de l'autre.

Le dispositif comporte en outre des moyens de maintien 6 du clapet 3 en position fermée, des moyens d'actionnement 7 pour passer le clapet 3 de la position fermée à la position ouverte et des moyens d'ouverture 8 aptes à maintenir le clapet 3 en position ouverte de manière irréversible après l'actionnement par les moyens d'actionnement 7.

L'obturateur 30 comporte une tête 301 coopérant avec le siège 31 pour former le clapet 3 et une tige 302 portant la tête 301. La tige 302 est montée coulissante dans le corps 2 en aval du siège. Autrement dit, la tête 301 de l'obturateur 30 est du côté amont de la tige 302. La communication fluidique entre l'amont et l'extrémité aval 22 de part et d'autre de la tête 301 de l'obturateur 30 est assurée par un jeu entre la tige 302 et le corps 2. Le jeu est agencé pour permettre un débit de fluide d'au moins 1001/h en position ouverte. Alternativement au jeu, des canaux 23 peuvent être prévus dans le corps 2 parallèlement à la tige 302 afin de mettre en communication fluidique la chambre délimitée entre le corps 2 et la tête 301 de l'obturateur 30 par le siège avec l'extrémité aval 22.

Les moyens de maintien 6 en position fermée comportent un ressort 60 agissant sur l'obturateur 30 dans le sens vers le côté aval. Pour cela, le ressort 60 est hélicoïdal et placé autour de la tige 302 en appui d'une part côté aval sur une collerette 61 solidaire de la tige 302 et d'autre part sur un épaulement 62 du corps 2 côté amont. La collerette 61 est par exemple d'un seul tenant avec la tige 302. Ainsi, le ressort 60 plaque la tête 301 de l'obturateur 30 contre le siège.

Les moyens d'ouverture 8 comportent une première gorge 81 circulaire sur la tige 302 placée en aval de la collerette 61. Les moyens de d'ouverture 8 comportent en outre une deuxième gorge 82 circulaire dans le corps 2 dans laquelle se loge une bille 83 en périphérie de la tige 302. Les gorges 81, 82 sont placées pour être en vis-à-vis l'une de l'autre lorsque le clapet 3 est en position ouverte. La bille 83 se loge alors dans la première gorge 81 circulaire en restant en saillie de la tige 302 dans la deuxième gorge 82 circulaire afin de réaliser le maintien de l'obturateur 30 pour que le clapet 3 soit ouvert.

Alternativement, la bille 83 peut être remplacée par un anneau métallique. A cet effet, la dimension radiale de l'anneau est plus importante que la profondeur de la première gorge 81 circulaire. L'anneau est par exemple réalisé en acier à ressort et est une boucle ouverte.

Les moyens d'actionnement 7 comportent la surface 70 de l'obturateur 30 en communication avec l'extrémité aval 22 de manière à former un piston actionné par une pression alimentant l'extrémité aval 22.

Lors de l'utilisation, le dispositif est mis avec le clapet 3 en position fermée. La bille 83 est dans la deuxième gorge 82 en enserrant la tige 302. Un manchon, non représenté, est mis en place autour du dispositif de telle sorte que les coupelles 50 sont comprimées et ont leur partie centrale 501 proche d'une forme cylindrique, et que les griffes 401a, 401b sont rabattues le long du corps 2. Le diamètre extérieur du manchon est inférieur assez nettement au diamètre intérieur de la canalisation 1 dans laquelle le dispositif est destiné à prendre place. Le dispositif, maintenu par le manchon, est introduit par une extrémité accessible de la canalisation 1, par exemple depuis un coffret de distribution, en utilisant un jonc souple, non représenté. Une fois en position, le manchon est retiré, de telle sorte que les griffes 401a, 401b du dispositif et les coupelles 50 du double joint se déploient et viennent en appui contre la face interne de la canalisation 1. Le dispositif est alors bloqué en place par les griffes 401a, 401b à l'encontre des sollicitations générées par des différences de pression, qu'elles soient de l'amont vers l'aval ou de l'aval vers l'amont. De plus, les moyens d'étanchéité 5 réalisent une étanchéité entre le corps 2 et la canalisation 1 vis-à-vis des mêmes différences de pression, chaque coupelle 50 obturant l'espace 11 tubulaire entre le corps 2 et la canalisation 1 dans l'un des sens.

Au moment de l'introduction, le clapet 3 du dispositif est fermé de telle sorte qu'il réalise dès sa mise en place une obturation de la canalisation 1.

Si lors de l'exploitation du réseau, il est nécessaire de rétablir l'utilisation de la canalisation 1, on réalise une alimentation en fluide comprimé en aval du dispositif. On monte la pression à un niveau tel que la sollicitation de cette pression sur l'obturateur 30 permet de vaincre la sollicitation du ressort 60. L'obturateur 30 s'ouvre alors jusqu'à ce que la première et la deuxième gorge 81, 82 coïncident. La bille 83 se déplace alors et se loge partiellement dans la première gorge 81, avec une partie faisant saillie de la tige 302 et logée dans la deuxième gorge 82. On peut alors relâcher la pression du fluide côté aval. La communication entre l'amont et l'aval du dispositif est alors rétablie.

L'invention n'est pas limitée au mode de réalisation qui vient d'être décrit à titre d'exemple. L'orientation de la tige pourra être inversée, la tête de l'obturateur étant placée en aval de la tige.

## Revendications

1. Dispositif de contrôle du passage d'un fluide destiné à être inséré dans une canalisation (1), le dispositif comportant un corps (2) de forme allongée et s'étendant entre une extrémité amont (21) et une extrémité aval (22), un obturateur (30) formant un clapet (3) avec un siège (31) du corps (2) pour contrôler le passage du fluide entre l'extrémité amont (21) et l'extrémité aval (22), le clapet (3) prenant une position fermée dans laquelle le passage du fluide entre l'extrémité amont (21) et aval (22) est obturé et une position ouverte dans laquelle le passage du fluide est possible, le dispositif comportant des moyens d'étanchéité (5) sur le corps (2) aptes à s'étendre et réaliser une étanchéité entre le corps (2) et la canalisation (1), le dispositif étant **caractérisé en ce qu'**il comporte des moyens de maintien (6) du clapet (3) en position fermée, des moyens d'actionnement (7) pour passer le clapet (3) de la position fermée à la position ouverte et des moyens d'ouverture (8) aptes à maintenir le clapet (3) en position ouverte après l'actionnement par les moyens d'actionnement (7).

2. Dispositif selon la revendication 1, dans lequel les moyens d'ouverture (8) sont irréversibles.

3. Dispositif selon la revendication 1 ou 2, dans lequel l'obturateur (30) comporte une tête (301) coopérant avec le siège (31) pour former le clapet (3) et une tige (302) montée coulissante dans le corps (2) et portant la tête (301).

4. Dispositif selon la revendication 3, dans lequel les moyens de maintien d'ouverture (8) comportent une première gorge (81) circulaire sur la tige (302), une deuxième gorge (82) circulaire dans le corps (2) dans laquelle se loge au moins une bille (83) en périphérie de la tige (302), les gorges (81, 82) étant en vis-à-vis l'une de l'autre lorsque le clapet (3) est en position ouverte, la bille (83) étant apte à se loger dans la première gorge (81) en restant en saillie de la tige (302) dans la deuxième gorge (82) afin de réaliser le maintien de l'obturateur (30) pour que le clapet (3) soit ouvert.

5. Dispositif selon la revendication 3, dans lequel les moyens de maintien (6) en position fermée comportent un ressort (60) agissant sur l'obturateur (30) dans le sens vers le côté aval.

6. Dispositif selon la revendication 5, dans lequel la tête (301) de l'obturateur (30) est du côté amont de la tige (302), et le ressort (60) est placé autour de la tige (302) en appui d'une part côté aval sur une collerette (61) solidaire de la tige (302) et d'autre part sur le corps (2) côté amont.

7. Dispositif selon la revendication 3, dans lequel les moyens d'actionnement (7) comportent la surface de l'obturateur (30) en communication avec l'extrémité aval (22) de manière à former un piston actionné par une pression alimentant l'extrémité aval (22).

8. Dispositif selon la revendication 1, **caractérisé en ce qu'**il comporte des moyens de centrage (4) dans la canalisation (1).

9. Dispositif selon la revendication 8, dans lequel les moyens de centrage (4) comportent au moins deux bagues (40a, 40b), chaque bague comportant des griffes (401a, 401b) disposées en éventail, les griffes (401a) d'au moins une bague (40a) étant orientées vers l'amont et les griffes (401b) d'au moins une autre bague (40b) étant orientées vers l'aval, chaque griffe (401a, 401b) comportant une extrémité libre (4010) sollicitée élastiquement vers une position de déploiement radial.

10. Dispositif selon l'une quelconque des revendications précédentes, dans lequel les moyens d'étanchéité (5) comportent un double joint à coupelles (50), les coupelles (50) étant orientées dans des sens opposés.

## Patentansprüche

1. Vorrichtung zum Kontrollieren des Durchgangs eines Fluids, die dazu bestimmt ist, in eine Kanalisation (1) eingesetzt zu werden, wobei die Vorrichtung einen Körper (2) von länglicher Form aufweist und der sich zwischen einem stromaufwärtigen Ende (21) und einem stromabwärtigen Ende (22) erstreckt, wobei ein Verschluss (30) ein Ventil (3) mit einem Sitz (31) des Körpers (2) bildet, um den Durchgang der Flüssigkeit zwischen dem stromaufwärtigen Ende (21) und dem stromabwärtigen Ende (22) zu kontrollieren, wobei das Ventil (3) eine geschlossene Position, in der der Durchgang des Fluids zwischen dem stromaufwärtigen Ende (21) und dem stromabwärtigen Ende (22) verschlossen ist, und eine offene Position einnimmt, in der der Durchgang des Fluids möglich ist, wobei die Vorrichtung Dichtungsmittel (5) auf dem Körper (2) aufweist, die geeignet sind, sich zwischen dem Körper (2) und der Kanalisation (1) zu erstrecken und dazwischen eine Abdichtung zu erzielen,
wobei die Vorrichtung **dadurch gekennzeichnet ist, dass** sie Mittel zum Halten (6) des Ventils (3) in der geschlossenen Position, Betätigungsmittel (7), um das Ventil (3) von der geschlossenen Position in die offene Position übergehen zu lassen, und Öffnungsmittel (8) aufweist, die geeignet sind, das Ventil (3) nach dem Betätigen durch die Betätigungsmittel (7) in der offenen Position zu halten.

2. Vorrichtung nach Anspruch 1, wobei die Öffnungsmittel (8) unumkehrbar sind.

3. Vorrichtung nach Anspruch 1 oder 2, wobei der Verschluss (30) einen Kopf (301), der mit dem Sitz (31) zusammenwirkt, um das Ventil (3) zu bilden, und eine Stange (302) aufweist, die verschiebbar in dem Körper (2) angebracht ist und den Kopf (301) trägt.

4. Vorrichtung nach Anspruch 3, wobei die Mittel zum Halten der Öffnung (8) eine erste kreisförmige Nut (81) auf der Stange (302), eine zweite kreisförmige Nut (82) in dem Körper (2) aufweisen, in dem mindestens eine Kugel (83) am Umfang der Stange (302) aufgenommen ist, wobei die Nuten (81, 82) einander zugewandt sind, wenn sich das Ventil (3) in der offenen Position befindet, wobei die Kugel (83) geeignet ist, in der ersten Nut (81) aufgenommen zu werden, während sie von der Stange (302) in der zweiten Nut (82) vorstehend bleibt, um das Halten des Verschlusses (30) zu erzielen, damit das Ventil (3) offen ist.

5. Vorrichtung nach Anspruch 3, wobei die Mittel zum Halten (6) in der geschlossenen Position eine Feder (60) aufweisen, die auf den Verschluss (30) in die Richtung zur stromabwärtigen Seite einwirkt.

6. Vorrichtung nach Anspruch 5, wobei sich der Kopf (301) des Verschlusses (30) auf der stromaufwärtigen Seite der Stange (302) befindet und die Feder (60) um die Stange (302) herum einerseits auf der stromabwärtigen Seite in Auflage auf einem Flansch (61), der mit der Stange (302) fest verbunden ist, und andererseits auf der stromaufwärtigen Seite auf dem Körper (2) angeordnet ist.

7. Vorrichtung nach Anspruch 3, wobei die Betätigungsmittel (7) die Oberfläche des Verschlusses (30) in Verbindung mit dem stromabwärtigen Ende (22) derart aufweisen, um einen Kolben zu bilden, der durch einen Druck betätigt wird, der das stromabwärtige Ende (22) beaufschlagt.

8. Vorrichtung nach Anspruch 1, **dadurch gekennzeichnet, dass** sie Zentriermittel (4) in der Kanalisation (1) aufweist.

9. Vorrichtung nach Anspruch 8, wobei die Zentriermittel (4) mindestens zwei Ringe (40a, 40b) aufweisen, wobei jeder Ring Klauen (401a, 401b) aufweist, die fächerförmig angeordnet sind, wobei die Klauen (401a) von mindestens einem Ring (40a) stromaufwärts ausgerichtet sind und die Klauen (401b) von mindestens einem anderen Ring (40b) stromabwärts ausgerichtet sind, wobei jede Klaue (401a, 401b) ein freies Ende (4010) aufweist, das elastisch in Richtung einer radialen Entfaltungsposition vorgespannt ist.

10. Vorrichtung nach einem der vorhergehenden Ansprüche, wobei die Dichtungsmittel (5) eine doppelte Becherdichtung (50) aufweisen, wobei die Becher (50) in entgegengesetzte Richtungen ausgerichtet sind.

## Claims

1. Device for controlling the passage of a fluid and intended to be inserted in a pipe (1), the device comprising a body (2) of elongate shape and extending between an upstream end (21) and a downstream end (22), an obturator (30) forming a valve (3) with a seat (31) of the body (2) to control the passage of the fluid between the upstream end (21) and the downstream end (22), the valve (3) adopting a closed position in which the passage of the fluid between the upstream end (21) and the downstream end (22) is shut off and an open position in which the passage of the fluid is possible, the device comprising sealing means (5) on the body (2) which are able to expand and provide sealing between the body (2) and the pipe (1), the device being **characterized in that** it comprises retaining means (6) for keeping the valve (3) in the closed position, actuating means (7) for making the valve (3) pass from the closed position to the open position to the open position, and opening means (8) able to keep the valve (3) in the open position after it has been actuated by the actuating means (7) .

2. Device according to Claim 1, in which the opening means (8) are irreversible.

3. Device according to Claim 1 or 2, in which the obturator (30) comprises a head (301) cooperating with the seat (31) to form the valve (3) and a stem (302) mounted with the ability to slide in the body (2) and bearing the head (301).

4. Device according to Claim 3, in which the means (8) for holding the valve open comprise a first circular groove (81) on the stem (302), a second circular groove (82) in the body (2) in which at least one ball (83) at the periphery of the stem (302) is housed, the grooves (81, 82) facing one another when the valve (3) is in the open position, the ball (83) being able to be housed in the first groove (81) while still projecting out from the stem (302) into the second groove (82) so as to hold the obturator (30) in place so that the valve (3) is open.

5. Device according to Claim 3, in which the means (6) for keeping the valve in the closed position comprise a spring (60) acting on the obturator (30) in the direction towards the downstream side.

6. Device according to Claim 5, in which the head (301) of the obturator (30) is on the upstream side of the stem (302) and the spring (60) is positioned around the stem (302) so that it bears, on the one hand, on the downstream side, on a collar (61) attached to the stem (302) and, on the other hand, on the body (2) on the upstream side.

7. Device according to Claim 3, in which the actuating means (7) comprises the surface of the obturator (30) that is in communication with the downstream end (22) so as to form a piston actuated by a pressure supplied to the downstream end (22).

8. Device according to Claim 1, **characterized in that** it comprises means (4) of centring in the pipe (1).

9. Device according to Claim 8, **characterized in that** the means (4) of centring comprise at least two rings (40a, 40b), each ring comprising claws (401a, 401b) arranged in a fantail, the claws (401a) of at least one ring (40a) being oriented in the upstream direction and the claws (401b) of at least one other ring (40b) being oriented in the downstream direction, each claw (401a, 401b) having a free end (4010) that is elastically urged towards a radial deployment position.

10. Device according to any one of the preceding claims, in which the sealing means (5) comprise a double cup seal (50), the cups (50) facing in opposite directions.
